# EUROPEAN PATENT APPLICATION

(11) **EP 4 366 402 A1**
(43) Date of publication of application: **08.05.2024**
(21) Application number: 23205407.2
(22) Date of filing: 24.10.2023
(51) Int. Cl.: H04W 56/00

(54) **METHOD AND APPARATUS FOR CONFIGURING AN UPLINK TIMING ADVANCE LOOP**

(30) Priority: 07.11.2022 US 202263382570 P
(71) Applicant: Nokia Technologies Oy, 02610 Espoo (FI)
(72) Inventor: GOLD, Dimitri, Espoo (FI); DALSGAARD, Lars, Oulu (FI)
(74) Representative: Nokia EPO representatives

(57) **Abstract**

A method, apparatus, and computer program product configure an uplink timing advance loop in order to facilitate uplink transmission including uplink transmission following a change in the uplink beam. In the context of a method, it is determined that a plurality of timing advance loops are supported to a plurality of transmission points. In response to a triggering mobility event, the method determines whether uplink timing information is available for a respective transmission point. In response to a determination that uplink timing information is unavailable for the respective transmission point, the method configures an uplink timing advance loop by synchronizing to a downlink beam and/or reference signal from the respective transmission point setting a timing advance value and then using a gradual timing adjustment procedure to adjust the uplink timing advance loop.

## Description

### RELATED APPLICATION

This application claims priority to US provisional Application No. 63/382570 filed November 7, 2022, which is incorporated herein by reference in its entirety.

### TECHNOLOGICAL FIELD

An example embodiment relates generally to techniques for facilitating uplink transmission and, more particularly, to techniques for determining uplink timing information to facilitate changes in the uplink beam.

### BACKGROUND

User equipment of various types traditionally transmitted and received millimeter wave signals, termed Frequency Range 2 (FR2) signals, in a unidirectional fashion. Although uplink transmissions from the user equipment have remained unidirectional, recent advances have made it possible for user equipment to receive from more than one spatial direction at a time, e.g. simultaneous reception from non-collocated sources.

Transmission in uplink is typically configured such that the signals from the user equipment arrive at an access point, such as a gNB, within a limited reception window. In some instances, user equipment uses a timing advance value to ensure that its uplink transmission is received at the gNB within the reception window. The timing advance value generally defines the time required for signals to propagate from the user equipment to the gNB and, as such, serves to indicate the length of time in advance of the reception window that the user equipment should transmit signals to increase the likelihood that the signals will be received by the gNB during the reception window. In some instances in which a user equipment is communicating in both uplink and downlink with a source, the user equipment tracks the downlink timing of signals transmitted by the source. Based on the change in the downlink timing as the user equipment moves, the user equipment may adjust the timing advance value to ensure that its uplink transmissions are received at the gNB within the reception window.

In operation, the user equipment may change its uplink beam so as to transmit signals to a different gNB. Such a change spatial directions for the uplink beam may create several challenges. For example, when making a large uplink adjustment, there can be a correspondingly large delay as the timing advance value for signals transmitted to the new gNB is determined.

### BRIEF SUMMARY

A method, apparatus, and computer program product are disclosed for configuring an uplink timing advance loop in order to facilitate uplink transmission including uplink transmission following a change in the uplink beam. By configuring an uplink timing advance loop in accordance with an example embodiment, an uplink beam can be changed to a different source, such as a different gNB, more efficiently and with less delay. Thus, uplink communications can be conducted more seamlessly and efficiently.

In an example embodiment, an apparatus is provided that comprises at least one processor and at least one memory including computer program code with the at least one memory and the computer program code configured to, with the at least one processor, cause the apparatus at least to determine that a plurality of timing advance loops are supported to a plurality of transmission points. In response to a triggering mobility event, the at least one memory and the computer program code are also configured to, with the at least one processor, cause the apparatus to determine whether uplink timing information is available for a respective transmission point. In response to a determination that uplink timing information is unavailable for the respective transmission point, the at least one memory and the computer program code are further configured to, with the at least one processor, cause the apparatus to configure an uplink timing advance loop by synchronizing to a downlink beam and/or reference signal from the respective transmission point by setting a timing advance value and then using a gradual timing adjustment procedure to adjust the uplink timing advance loop.

In some embodiments, the at least one memory and the computer program code are further configured to, with the at least one processor, cause the apparatus to maintain a plurality of uplink timing advance loops simultaneously for a plurality of transmission points.

In an example embodiment in which the triggering mobility event comprises an uplink beam change, a downlink beam change, a change of reference signals, a change of a precoding matrix, a change of the respective transmission point or a change of antenna panel, the at least one memory and the computer program code are further configured to, with the at least one processor, cause the apparatus to determine whether the transmission point remains the same following the uplink beam change or the downlink beam change. In response to a determination that the transmission point remains the same, in this example embodiment the at least one memory and the computer program code are further configured to, with the at least one processor, cause the apparatus to configure the uplink timing advance loop also based on an uplink transmit timing advance value previously defined for the transmission point. In response to a determination that the transmission point does not remain the same, in this example embodiment the at least one memory and the computer program code are further configured to, with the at least one processor, cause the apparatus to configure the uplink timing advance loop also based on target beam information.

In an example embodiment, the at least one memory and the computer program code are configured to, with the at least one processor, cause the apparatus to determine whether the transmission point remains the same based on a downlink timing difference between a downlink beam prior to the triggering mobility event and a downlink beam following the triggering mobility event.

In one or more embodiments, the at least one memory and the computer program code are further configured to, with the at least one processor, cause the apparatus to determine whether the transmission point remains the same based on network signaling.

In one or more embodiments in which the transmission point does not remain the same, the at least one memory and the computer program code are further configured to, with the at least one processor, cause the apparatus to cause transmission of a random access preamble using a downlink beam after the triggering mobility event. In this example embodiment, the at least one memory and the computer program code are further configured to, with the at least one processor, cause the apparatus to receive a random access reply message. In this example embodiment, the at least one memory and the computer program code are further configured to, with the at least one processor, cause the apparatus to determine a timing advance absolute value based on the random access reply message. In this example embodiment, the at least one memory and the computer program code are further configured to, with the at least one processor, cause the apparatus to configure the uplink timing advance loop also based on the timing advance absolute value.

In an example embodiment in which the transmission point does not remain the same, the at least one memory and the computer program code are further configured to, with the at least one processor, cause the apparatus to adjust the uplink transmit timing advance value previously defined from the previous transmission point based on a downlink timing difference between a downlink beam prior to the triggering mobility event and a downlink beam following the triggering mobility event. In this example embodiment, the at least one memory and the computer program code are further configured to, with the at least one processor, cause the apparatus to configure the uplink timing advance loop also based on the adjusted uplink transmit timing advance value.

In one or more embodiments, in response to a downlink beam change serving as the triggering mobility event, the at least one memory and the computer program code are further configured to, with the at least one processor, cause the apparatus to synchronize one of the plurality of uplink timing advance loops to a downlink beam and use a gradual timing adjustment procedure to adjust the uplink timing advance loop.

In an example embodiment, in an instance in which the plurality of timing advance loops are not supported and in response to a downlink beam change serving as the triggering mobility event, the at least one memory and the computer program code are further configured to, with the at least one processor, cause the apparatus to determine whether an uplink beam has changed. In this example embodiment, in an instance in which the uplink beam has not changed, the at least one memory and the computer program code are further configured to, with the at least one processor, cause the apparatus to configure the uplink timing advance loop by synchronizing to a downlink beam and using a gradual timing adjustment procedure to adjust the uplink timing advance loop. In this example embodiment, in an instance in which the uplink beam has changed, the at least one memory and the computer program code are further configured to, with the at least one processor, cause the apparatus to configure the uplink timing advance loop based on whether the transmission point has changed

In another example embodiment, a method is provided that comprises determining that a plurality of timing advance loops are supported to a plurality of transmission points. In response to a triggering mobility event, the method further comprises determining whether uplink timing information is available for a respective transmission point. In response to a determination that uplink timing information is unavailable for the respective transmission point, the method further comprises configuring an uplink timing advance loop by synchronizing to a downlink beam and/or reference signal from the respective transmission point by setting a timing advance value and then using a gradual timing adjustment procedure to adjust the uplink timing advance loop.

The method of an example embodiment further comprises maintaining a plurality of uplink timing advance loops simultaneously for a plurality of transmission points.

The method of an example embodiment in which the triggering mobility event comprises an uplink beam change, a downlink beam change, a change of reference signals, a change of a precoding matrix, a change of the respective transmission point or a change of antenna panel further comprises configuring the uplink timing advance loop by determining whether the transmission point remains the same following the uplink beam change or the downlink beam change. In response to a determination that the transmission point remains the same, the method further comprises configuring the uplink timing advance loop also based on an uplink transmit timing advance value previously defined for the transmission point. In response to a determination that the transmission point does not remain the same, the method further comprises configuring the uplink timing advance loop also based on target beam timing information.

The method of an example embodiment further comprises determining whether the transmission point remains the same based on a downlink timing difference between a downlink beam prior to the triggering mobility event and a downlink beam following the triggering mobility event.

The method of an example embodiment further comprises determining whether the transmission point remains the same based on network signaling.

The method of an example embodiment in which the transmission point does not remain the same further comprises causing transmission of a random access preamble using a downlink beam after the triggering mobility event. The method of this example embodiment further comprises receiving a random access reply message. The method of this example embodiment further comprises determining a timing advance absolute value based on the random access reply message. The method of this example embodiment further comprises configuring the uplink timing advance loop also based on the timing advance absolute value.

The method of an example embodiment in which the transmission point does not remain the same further comprises adjusting the uplink transmit timing advance value previously defined from the previous transmission point based on a downlink timing difference between a downlink beam prior to the triggering mobility event and a downlink beam following the triggering mobility event. The method of this example embodiment further comprises configuring the uplink timing advance loop also based on the adjusted uplink transmit timing advance value.

In response to a downlink beam change serving as the triggering mobility event, the method of an example embodiment further comprises synchronizing one of the plurality of uplink timing advance loops to a downlink beam and using a gradual timing adjustment procedure to adjust the uplink timing advance loop.

In an instance in which the plurality of timing advance loops are not supported and in response to a downlink beam change serving as the triggering mobility event, the method of an example embodiment further comprises determining whether an uplink beam has changed. In an instance in which the uplink beam has not changed, the method further comprises configuring the uplink timing advance loop by synchronizing to a downlink beam and using a gradual timing adjustment procedure to adjust the uplink timing advance loop. In an instance in which the uplink beam has changed, the method configures the uplink timing advance loop based on whether the transmission point has changed.

In a further example embodiment, a non-transitory computer readable storage medium is provided comprising computer instructions that, when executed by an apparatus, cause the apparatus to determine that a plurality of timing advance loops are supported to a plurality of transmission points. In this example embodiment, in response to a triggering mobility event, the non-transitory computer readable storage medium also includes computer instructions configured, upon execution, to determine whether uplink timing information is available for a respective transmission point. In this example embodiment, in response to a determination that uplink timing information is unavailable for the respective transmission point, the non-transitory computer readable storage medium further includes computer instructions configured, upon execution, to configure an uplink timing advance loop by synchronizing to a downlink beam and/or reference signal from the respective transmission point by setting a timing advance value and then using a gradual timing adjustment procedure to adjust the uplink timing advance loop.

The non-transitory computer readable storage medium of an example embodiment also includes computer instructions configured, upon execution, to maintain a plurality of uplink timing advance loops simultaneously for a plurality of transmission points.

In an example embodiment in which the triggering mobility event comprises an uplink beam change, a downlink beam change, a change of reference signals, a change of a precoding matrix, a change of the respective transmission point or a change of antenna panel, the non-transitory computer readable storage medium also includes computer instructions configured, upon execution, to determine whether the transmission point remains the same following the uplink beam change or the downlink beam change. In response to a determination that the transmission point remains the same, the non-transitory computer readable storage medium of this example embodiment further includes computer instructions configured, upon execution, to configure the uplink timing advance loop also based on an uplink transmit timing advance value previously defined for the transmission point. In response to a determination that the transmission point does not remain the same, the non-transitory computer readable storage medium of this example embodiment also includes computer instructions configured, upon execution, to configure the uplink timing advance loop also based on target beam timing information.

The non-transitory computer readable storage medium of an example embodiment also includes computer instructions configured, upon execution, to determine whether the transmission point remains the same based on a downlink timing difference between a downlink beam prior to the triggering mobility event and a downlink beam following the triggering mobility event.

The non-transitory computer readable storage medium of an example embodiment also includes computer instructions configured, upon execution, to determine whether the transmission point remains the same based on network signaling.

In an example embodiment in which the transmission point does not remain the same, the non-transitory computer readable storage medium also includes computer instructions configured, upon execution, to cause transmission of a random access preamble using a downlink beam after the triggering mobility event. The non-transitory computer readable storage medium of this example embodiment also includes computer instructions configured, upon execution, to receive a random access reply message. The non-transitory computer readable storage medium of this example embodiment further includes computer instructions configured, upon execution, to determine a timing advance absolute value based on the random access reply message. The non-transitory computer readable storage medium of this example embodiment also includes computer instructions configured, upon execution, to configure the uplink timing advance loop also based on the timing advance absolute value.

In an example embodiment in which the transmission point does not remain the same, the non-transitory computer readable storage medium of an example embodiment also includes computer instructions configured, upon execution, to adjust the uplink transmit timing advance value previously defined from the previous transmission point based on a downlink timing difference between a downlink beam prior to the triggering mobility event and a downlink beam following the triggering mobility event. The non-transitory computer readable storage medium of this example embodiment also includes computer instructions configured, upon execution, to configure the uplink timing advance loop also based on the adjusted uplink transmit timing advance value.

In response to a downlink beam change serving as the triggering mobility event, the non-transitory computer readable storage medium of an example embodiment also includes computer instructions configured, upon execution, to synchronize one of the plurality of uplink timing advance loops to a downlink beam and use a gradual timing adjustment procedure to adjust the uplink timing advance loop.

In an instance in which the plurality of timing advance loops are not supported and in response to a downlink beam change serving as the triggering mobility event, non-transitory computer readable storage medium of an example embodiment also includes computer instructions configured, upon execution, to determine whether an uplink beam has changed. In an instance in which the uplink beam has not changed, the non-transitory computer readable storage medium of an example embodiment also includes computer instructions configured, upon execution, to configure the uplink timing advance loop by synchronizing to a downlink beam and using a gradual timing adjustment procedure to adjust the uplink timing advance loop. In an instance in which the uplink beam has changed, the non-transitory computer readable storage medium of an example embodiment also includes computer instructions configured, upon execution, to configure the uplink timing advance loop based on whether the transmission point has changed.

In yet another example embodiment, an apparatus is provided that comprises means for determining that a plurality of timing advance loops are supported to a plurality of transmission points. In response to a triggering mobility event, the apparatus of this example embodiment further comprises means for determining whether uplink timing information is available for a respective transmission point. In response to a determination that uplink timing information is unavailable for the respective transmission point, the apparatus of this example embodiment further comprises means for configuring an uplink timing advance loop by synchronizing to a downlink beam and/or reference signal from the respective transmission point by setting a timing advance value and then using a gradual timing adjustment procedure to adjust the uplink timing advance loop.

The apparatus of an example embodiment further comprises means for maintaining a plurality of uplink timing advance loops simultaneously for a plurality of transmission points

The apparatus of an example embodiment in which the triggering mobility event comprises an uplink beam change, a downlink beam change, a change of reference signals, a change of a precoding matrix, a change of the respective transmission point or a change of antenna panel further comprises means for configuring the uplink timing advance loop by determining whether the transmission point remains the same following the uplink beam change or the downlink beam change. In response to a determination that the transmission point remains the same, the apparatus of this example embodiment further comprises means for configuring the uplink timing advance loop also based on an uplink transmit timing advance value previously defined for the transmission point. In response to a determination that the transmission point does not remain the same, the apparatus of this example embodiment further comprises means for configuring the uplink timing advance loop also based on target beam information.

The apparatus of an example embodiment further comprises means for determining whether the transmission point remains the same based on a downlink timing difference between a downlink beam prior to the triggering mobility event and a downlink beam following the triggering mobility event.

The apparatus of an example embodiment further comprises means for determining whether the transmission point remains the same based on network signaling.

The apparatus of an example embodiment in which the transmission point does not remain the same further comprises means causing transmission of a random access preamble using a downlink beam after the triggering mobility event. The apparatus of this example embodiment further comprises means for receiving a random access reply message. The apparatus of this example embodiment further comprises means for determining a timing advance absolute value based on the random access reply message. The apparatus of this example embodiment further comprises means for configuring the uplink timing advance loop also based on the timing advance absolute value.

The apparatus of an example embodiment in which the transmission point does not remain the same further comprises means for adjusting the uplink transmit timing advance value previously defined from the previous transmission point based on a downlink timing difference between a downlink beam prior to the triggering mobility event and a downlink beam following the triggering mobility event. The apparatus of this example embodiment further comprises means for configuring the uplink timing advance loop also based on the adjusted uplink transmit timing value.

In response to a downlink beam change serving as the triggering mobility event, the apparatus of an example embodiment further comprises means for synchronizing one of the plurality of uplink timing advance loops to a downlink beam and means for using a gradual timing adjustment procedure to adjust the uplink timing advance loop.

In an instance in which the plurality of timing advance loops are not supported and in response to a downlink beam change serving as the triggering mobility event, the apparatus of an example embodiment further comprises means for determining whether an uplink beam has changed. In an instance in which the uplink beam has not changed, the apparatus of this example embodiment further comprises means for configuring the uplink timing advance loop by synchronizing to a downlink beam and using a gradual timing adjustment procedure to adjust the uplink timing advance loop. In an instance in which the uplink beam has changed, the apparatus of this example embodiment further comprises means for configuring the uplink timing advance loop based on whether the transmission point has changed.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 is a block diagram of a system including user equipment and multiple transmission sources configured to communicate via uplink and downlink beams;
Figure 2 is an example of an FR2 deployment involving a high speed train.
Figures 3A-3C are examples of beam changes for downlink transmission and uplink reception on the network side in consecutive user equipment positions;
Figure 4 is a block diagram of an apparatus that may be specifically configured in accordance with an example embodiment of the present disclosure;
Figure 5 is a flowchart demonstrating the operations performed, such as by the apparatus of Figure 3, in order to maintain accurate and up-to-date uplink transmit timing in accordance with an example embodiment when user equipment is moving;
Figure 6 is a flowchart demonstrating the operations performed, such as by the apparatus of Figure 3, in order to update and use multiple uplink timing advance loops in accordance with an example embodiment;
Figure 7 is a flowchart demonstrating the operations performed, such as by the apparatus of Figure 3, in order to switch uplink beams when only one uplink timing advance loop is supported by the user equipment in accordance with an example embodiment;
Figure 8 is a flow diagram demonstrating the operations performed, such as by the apparatus of Figure 3, in order to initialize a second uplink timing advance loop and switch from a first uplink timing advance loop to the second uplink timing advance loop in accordance with an example embodiment; and
Figure 9 is a flow diagram demonstrating the operations performed, such as by the apparatus of Figure 3, in order to switch a second uplink timing advance loop to a third downlink beam in accordance with another example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of microprocessor(s), that require software or firmware for operations even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more USB flash drives), computer system memory or random-access memory (such as, DRAM, SRAM, EDO RAM), and the like.

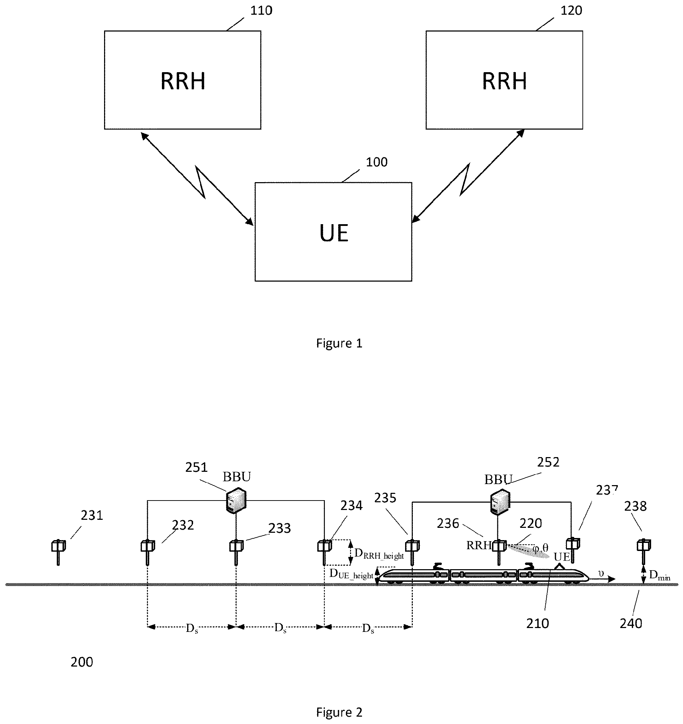

As illustrated in Figure 1, a system is provided in accordance with an example embodiment in order to facilitate uplink transmission from a user equipment 100, such as by maintaining uplink timing information that may be utilized when the uplink beam changes in order to increase the speed and efficiency with which a change in uplink transmissions is accomplished. Although the system may be configured in various manners, the system of one embodiment is depicted in Figure 1 and includes both user equipment **100** and transmission sources **110** and **120** configured to communicate via uplink and downlink transmission and reception beams. Although two transmission sources are depicted, the system may include and the user equipment **100** may communicate with additional transmission sources in other embodiments. As described below, the system is configured to synchronize the timing of uplink beams as the user equipment **100** moves relative to transmission sources **110** and **120.**

The data that is transmitted via the uplink and downlink beams between the user equipment **100** and the transmission sources **110** and **120** can be any of a wide variety of data including, but not limited to digital imagery data including video data, audio data as well as data provided by sensors, radars, telescopes and radio receivers. In at least some instances, the data is encoded prior to communication of the data via the uplink and downlink beams and decoded upon reception. The resulting data received may be utilized for a variety of purposes including presentation to a user, storage of the data for subsequent use and/or provision of the data to one or more applications, such as applications that perform statistical inference on the data for various purposes including object recognition, image classification, spectrum sensing, speech transcription and/or prediction or detection of events.

By way of example, the user equipment **100** of Figure 1 may receive and transmit FR2 millimeter waves in one spatial direction at a time. In various embodiments, the user equipment **100** of Figure 1 may be capable of receiving signals concurrently from more than one spatial direction at a time. In various embodiments transmission sources **110** and **120** may be collocated. In other embodiments, transmission sources **110** and **120** may be non-collocated. For example, the system of Figure 1 may involve inter-band carrier aggregation in FR2 with the user equipment **100** being able to support independent beam management and to receive on two carrier components from two non-collocated sources. In embodiments in which the UE **100** concurrently receives signals from two or more spatial directions, the user equipment **100** may be configured to track the timing of downlink beams from the multiple transmission sources **110** and **120** simultaneously.

The user equipment **100** of Figure 1 (also called UE, user device, user terminal, terminal device, etc.) illustrates one type of an apparatus to which resources on an air interface are allocated and assigned. The user equipment typically refers to a portable computing device that includes wireless mobile communication devices operating with or without a subscriber identification module (SIM), including, but not limited to, the following types of devices: a mobile station (mobile phone), smartphone, personal digital assistance (PDA), handset, device using a wireless modem (alarm or measurement device, etc.), laptop and/or touch screen computer, tablet, game console, notebook, and multimedia device. User equipment may also be a device having capability to operate in Internet of Things (IoT) network which is a scenario in which objects are provided with the ability to transfer data over a network without requiring human-to-human or human-to-computer interaction. The user equipment (or in some embodiments a layer 3 relay node) is configured to perform one or more of user equipment functionalities. The user equipment may also be called a subscriber unit, mobile station, remote terminal, access terminal, user terminal, or user equipment (UE) just to mention but a few names or apparatuses.

The transmission sources **110** and **120** of Figure 1 may comprise, for example, base stations, remote radio heads (RRHs), transmission reception points (TRPs), access points, node Bs (e.g., gNB) or other transmission sources. The transmission sources **110** and **120** of Figure 1 may be collocated or non-collocated.

The system and method of an example embodiment may be utilized in a wide variety of settings including, for example, in the context of a high speed train in which a UE carried by the train moves relative to transmission points in the form of the remote radio heads (RRHs), as shown in Figure 2. In an example embodiment, the user equipment **210** comprises power class 6 user equipment. In various embodiments, the user equipment **210** comprises customer premises equipment (CPE). In various embodiments, the user equipment **210** is equipped with for example two panels in order to support transmission and reception in two different directions. In one or more embodiments, only one of the panels may be used at a time. In other embodiments, both panels may be used simultaneously for downlink reception and one panel at a time may be used for uplink reception.

In some embodiments, signals **220** may be transmitted in a uni-directional fashion from RRHs **231-238** to the user equipment **210.** In other example embodiments, signals **220** may be transmitted in a bi-directional fashion to the user equipment **210** from RRHs located on opposite sides of the UE. In example embodiments, the railway track **240** is a near distance Dmin away from an RRH. For example, Dmin may be equal to 10m. On other example embodiments, the railway track is further away from an RRH. For example, Dmin may be equal to 150m.

In example embodiments, the propagation delays for signals transmitted from the RRHs **231-238** may be different. In example embodiments, the difference in propagation delays may result from the RRHs **231-238** being non-collocated. In example embodiments, the difference may be reflected by the cyclic prefix length.

The D_{RRH_height} of Figure 2 may reflect for example the height of the remote radio head above ground. The D_{UE_height} of Figure 2 may reflect for example the height of the user equipment **210** above ground. The Dₘᵢₙ of Figure 2 may reflect for example the distance between a remote radio head and a railway track. The UE of Figure 2 may be for example a high speed train. The Dₛ of Figure 2 may reflect for example the distance between two RRHs **231-238.** The angle θ of Figure 2 may for example reflect the angle between the top surface of an RRH **231-238** and the railway track. The angle ϕ of Figure 2 may reflect for example the angle between the angle θ and a downlink or uplink beam **220** between an RRH **236** and the user equipment **210.** The BBU of Figure 2 may for example be a baseband unit **251-252.**

Additionally, the system of Figure 1 may be relevant to for example multi-RX chain capable UEs, to network deployments where transmission sources are non-collocated, and to scenarios that are similar to high speed train deployments such as highways, predefined drone routes.

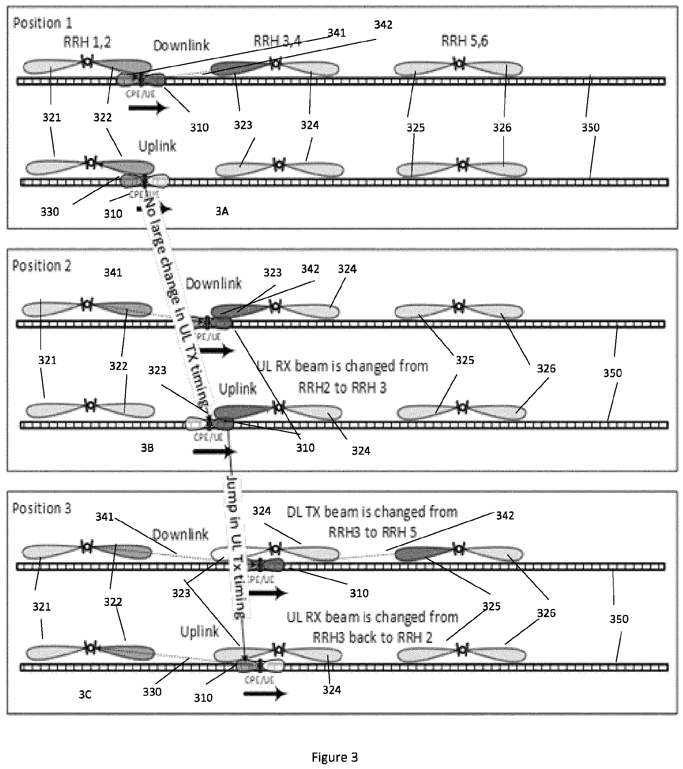

Figures 3A-3C illustrate an example of the switching of uplink and downlink beams on the network side as user equipment **310** moves between different positions, such as while onboard a high speed train of Figure 2, in a system in which a downlink beam change from an RRH to user equipment **310** may be independent of an uplink beam change from user equipment to an RRH. The user equipment **310** of this example embodiment is configured to receive downlink beams from two different directions, such as from two non-collocate RRHs simultaneously. In this regard, Figure 3A represents an initial position of user equipment **310.** In this example, the user equipment **310** is power class 6 user equipment or CPE. RRH 1-6 **321-326** represent remote radio heads that transmit and receive downlink and uplink beams to/from the user equipment. Figure 3B represents an intermediate position of user equipment **310** relative to the remote radio heads. Figure 3C represents a third position of the user equipment **310** relative to the remote radio heads. For each of Figures 3A-3C, the upper illustration represents downlink beams being transmitted from remote radio heads to user equipment **310,** while the lower illustration represents uplink beams being transmitted from user equipment **310** to remote radio heads.

In Figure 3A, downlink beams are transmitted from RRH2 **322** and RRH3 **323** to the UE **310.** An uplink beam from the UE **310** is received by RRH2 **322** because it is the closest RRH to the UE **310.**

In Figure 3B, the UE **310** has moved to the right so that it is closest to RRH3 **323.** In position 2, RRH2 **322** and RRH3 **323** continue to transmit downlink signals **341-342** to the UE **310** without change. However, because only one uplink beam can be transmitted a time from the UE **310,** the UE **310** now transmits the uplink beam **330** to RRH3 **323.** The UE **310** changes the spatial direction of its uplink transmission **330** in response to moving closer to RRH3 **323** than RR2 without any change in the spatial direction of downlink reception.

In Figure 3C, the UE **310** moves so as to approximately underlie RRH3 **323** and RRH4 **324.** In this example, the signal strength from RRH3 **323** and RRH4 **324** is low due to beamforming and beam orientation along the railway track **350.** As such, in Figure 3C, RRH2 **322** continues to transmit downlink beams **341-342** to the UE **310,** but RRH3 **323** is replaced by RRH5 **325** such that RRH5 **325** now transmits downlink beams **341-342** to the UE **310.** The UE **310** of Figure 3C also ceases to transmit uplink beams **330** to RRH3 **323** because of the low signal strength, and instead returns to transmitting uplink beams **330** to RRH2 **322** because it is a closer alternative than RRH5 **325.** In this scenario, the downlink beam and the uplink beam switch happen independently to two different transmission sources, or RRHs. This figure illustrates that in order to select an uplink signal with optimal signal strength, the same downlink reception and uplink transmission beams cannot always be used after a downlink beam change.

Under previous methods, user equipment uplink transmit timing adjustment procedures were followed after beam switch. These procedures could use either a physical random access channel (PRACH)-based or an optional large one-step timing adjustment procedure. However, these procedures need to be executed for every downlink transmission configuration information (TCI) state switch, which may result in delayed access to an uplink while the timing advance is determined.

Uplink reception beam **330** and/or RRH change does not always coincide with a downlink beam switch. A scenario where there is no downlink beam switch is illustrated in Figure 3 when the user equipment **310** moves from the position of Figure 3A to the position of Figure 3B, and uplink transmission timing adjustment is still needed. It may be inefficient to initiate a PRACH procedure at every user equipment uplink beam change to adjust UL transmit timing when there is no large change in the downlink propagation delay between source and target. For example, the source and target may reside in the same, for example, access point, e.g., the same RRH or be a similar distance to the user equipment.

Figures 3B and 3C illustrate another scenario where current methods may be inefficient. When the UE **310** moves from the position of Figure 3B to the position of Figure 3C, the downlink beam **342** for the UE **310** is changed from RRH3 to RRH5, but the downlink reference timing for the uplink transmission is changed from RRH3 back to RRH2. Although prior methods may monitor the downlink reference timing for RRH5, the downlink reference timing for R5 may not be needed since the uplink is with RR2.

Additionally, a change in a downlink beam on the network side may not coincide with the change of downlink transmission beam (TCI state switch). The change can happen together with the addition of a new downlink transmission (TCI state) if the user equipment is capable to receive multiple downlink beams (e.g. it is multi-reception chain user equipment).

An apparatus, method and computer program product are provided in order to facilitate switching of an uplink beam in a manner that can operate with an appropriate timing advance in a more expeditious manner. For example, the apparatus, method and computer program product of an example embodiment are configured to distinguish between an intra-RRH beam switch and an inter-RRH beam switch. As such, the user equipment can accurately evaluate whether the beam change is associated with a large jump in propagation delay, such as in conjunction with an inter-RRH beam switch, or not, such as in conjunction with an intra-RRH beam switch, so as to determine whether a significant uplink transmit timing adjustment is needed or not.

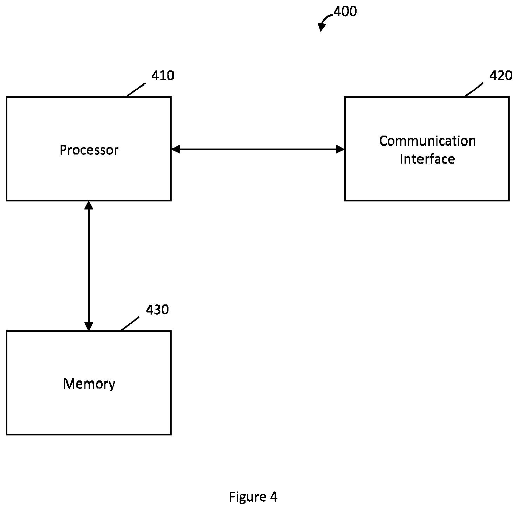

One example of an apparatus **400** that may be configured to function in accordance with an example embodiment is depicted in Figure 4. As shown in Figure 4, the apparatus includes, is associated with or is in communication with processing circuity **410,** a memory **430** and a communication interface **420.** The processing circuitry may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processing circuitry). The memory device may be configured to store information, data, content, applications, instructions, or the like for enabling the apparatus to carry out various functions in accordance with an example embodiment of the present disclosure. For example, the memory device could be configured to buffer input data for processing by the processing circuitry. Additionally or alternatively, the memory device could be configured to store instructions for execution by the processing circuitry.

The apparatus **400** may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processing circuitry **410** may be embodied in a number of different ways. For example, the processing circuitry may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry **410** may be configured to execute instructions stored in the memory device **430** or otherwise accessible to the processing circuitry. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of instructions, the instructions may specifically configure the processor to perform the algorithms and/or operations described herein when the instructions are executed. However, in some cases, the processing circuitry may be a processor of a specific device (e.g., an image or video processing system) configured to employ an embodiment of the present invention by further configuration of the processing circuitry by instructions for performing the algorithms and/or operations described herein. The processing circuitry may include, among other things, a clock, an arithmetic logic unit (ALU) and logic gates configured to support operation of the processing circuitry.

The communication interface **420** may be any means such as a device or circuitry embodied in either hardware or a combination of hardware and software that is configured to receive and/or transmit data, including media content in the form of video or image files, one or more audio tracks or the like. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

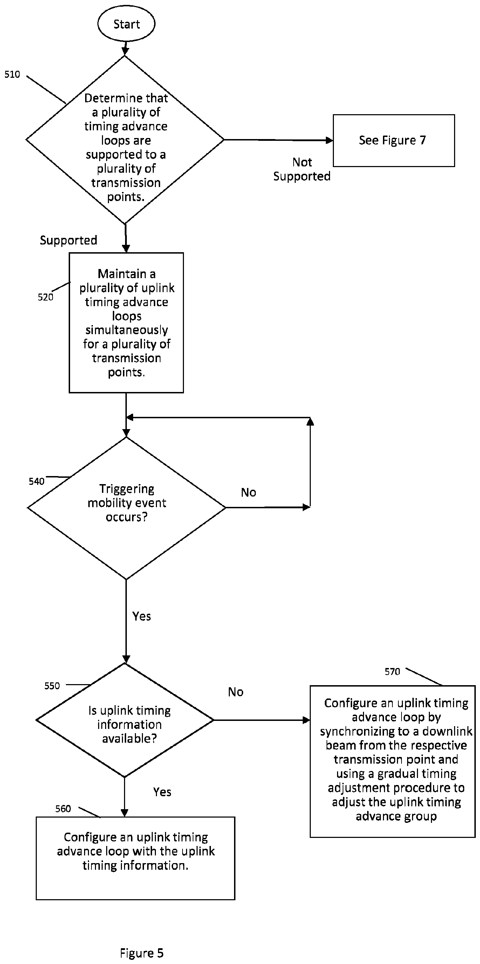

Referring now to Figure 5, the operations performed in order to facilitate a switch of an uplink beam to a different transmission point, e.g., a different gNB or RRH, by efficiently determining the timing advance are depicted. As shown in block **510** of Figure 5, the apparatus **400** includes means, such as the processing circuitry **410** or the like, for determining whether a plurality of timing advance loops are supported to a plurality of transmission points. In an instance in which a plurality of timing advance loops are supported, the apparatus also includes means, such as the processing circuitry or the like, for maintaining a plurality of uplink timing advance loops simultaneously for a plurality of transmission points. See block **520.** Each uplink timing advance loop may define the timing advance for a different respective transmission point. Although the UE may have established an uplink beam with one of the transmission points, the UE may not currently have established an uplink beam with the other transmission point(s) for which an uplink timing advance loop is maintained.

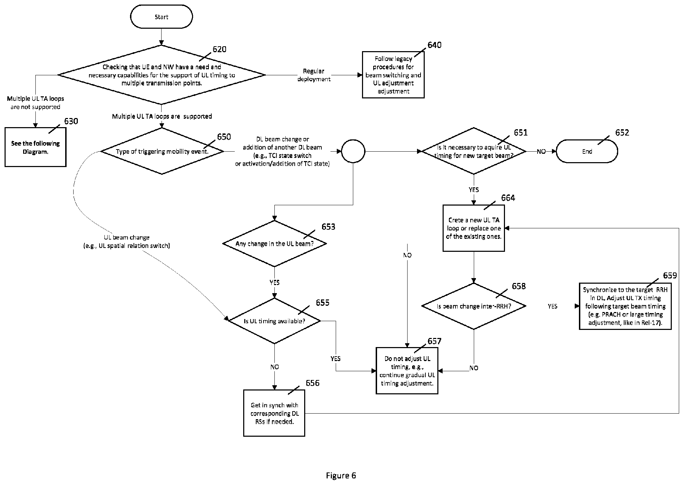

The apparatus **400** of an example embodiment further includes means, such as the processing circuitry **410,** the communication interface **420** or the like, for determining whether a triggering mobility event has occurred. See block **540.** Various types of triggering mobility events may be defined including, for example, an uplink beam change, a downlink beam change, the addition of another downlink beam, a TCI state switch or the activation or addition of a TCI state as shown in Figure 6 and described below. Other examples of a triggering mobility event include a change of reference signals, a change of a precoding matrix, a change of the respective transmission point or a change of antenna panel.

In an instance in which a plurality of timing advance groups are supported to a plurality of transmission points and in response to a triggering mobility event, the apparatus **400** of an example embodiment also includes means **550,** such as the processing circuitry **410** or the like, for determining whether uplink timing information is available for a respective transmission point, such as by reference to the memory **430** that stores the uplink timing information in some embodiments.

In response to a determination that uplink timing information is available for a respective transmission point, the apparatus **400** further provides means **560,** such as the processing circuitry **410** or the like, for configuring an uplink timing advance loop based on the available uplink timing advance information for the respective transmission point.

However, in response to a determination that uplink timing information is unavailable for the respective transmission point, the apparatus **400** further comprises means **570,** such as the processing circuitry **410,** the communication interface **420,** or the like, for configuring an uplink timing advance loop by synchronizing to a downlink beam and/or reference signal; from the respective transmission point (such as in an instance in which the same transmission point serves to provide downlink signals) by setting a timing advance value and then using a gradual timing adjustment procedure to adjust the uplink timing advance loop. In this regard, the timing advance may be adjusted based upon changes over time to the signal propagation delay experienced by downlink signals from the same transmission point. In an example embodiment, the timing advance value may be set either based on the downlink (DL) timings of the source and target DL beams or using a PRACH procedure towards the transmission point of the new target beam.

In some embodiments, the apparatus **400** comprises means, such as the processing circuitry **410** or the like, for configuring the uplink timing advance loop also based on target beam timing information. In addition to the target beam timing information, the uplink timing advance loop may also be configured in some example embodiments based on timing information for the current/prior source beam and/or on the current value of the timing advance, that is, the value that is controlled by the uplink timing advance loop itself. In other embodiments, the apparatus comprises means, such as the processing circuitry or the like, for configuring the uplink timing advance loop also based on an uplink transmit timing advance value previously defined for the transmission point. As such, the timing advance for a respective transmission point may initially be defined based on the target beam timing information provided, for example, by the network or the uplink transmit timing advance value previously defined for the respective transmission point with subsequent adjustments based on the gradual timing adjustment procedure.

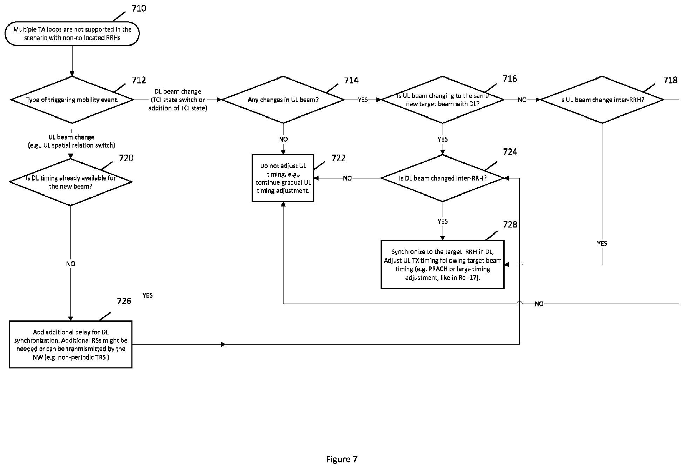

Referring now to Figure 6, a flowchart is provided for illustrating the manner in which multiple uplink timing advance loops can be updated and used. As shown in block **620,** the apparatus **400** includes means, such as the processing circuitry **410** or the like, for determining that a plurality of timing advance loops are supported to a plurality of transmission points. This determination may be made in various manners including, for example, determining whether network deployment and user equipment are compliant with the process depicted by Figure 6, such as in an instance in which RRHs need not be collocated, large jumps in propagation delays are accommodated, the deployment is for FR2 signaling and, in particular, FR2 signaling in conjunction with a high speed train, the UE is of a Power Class 6, etc. In an instance in which multiple timing advance loops are not supported, but the advantages provided by maintaining timing advance information for a plurality of transmission points is desired, the process may proceed to the operations depicted in Figure 7. See block **630.** Alternatively, in an instance in which multiple timing loops are not supported, legacy procedures for beam switching and uplink beam adjustment may be followed. See block **640.**

However, in an instance in which multiple timing advance loops are supported, the apparatus **400** includes means, such as the processing circuitry **410** or the like, for determining whether a triggering mobility event has occurred and, if so, the type of triggering mobility event. See block **650.** In an example in which there is a triggering mobility event in the form of a downlink beam change or the addition of another downlink beam (such as identified by a TCI state switch or the activation/addition of TCI state), the apparatus provides means, such as the processing circuitry or the like, for determining whether it is necessary to acquire uplink timing for a new target beam. See block 651. The apparatus, such as the processing circuitry, in some embodiments may be configured to always obtain uplink timing for the new target downlink beam. In other embodiments, however, the apparatus, such as the processing circuitry, may be configured to determine whether it is necessary to acquire uplink timing based on whether the same transmission point supports both uplink and downlink beams with the user equipment in which case, uplink timing need not be acquired. In an instance in which uplink timing is needed, the apparatus provides means, such as the processing circuitry, or the like, for configuring a new uplink timing advance loop, such as by creating a new uplink timing advance loop or replacing an existing uplink timing advance loop, based on target beam information. See block **664.**

In addition to determining whether it is necessary to acquire uplink timing for a new target beam, the apparatus **400** of the example embodiment of Figure 6 also includes means, such as the processing circuitry **410** or the like, for determining whether there is any change in the uplink beam in an instance in which the triggering mobility event is a downlink beam change or the addition of another downlink beam. See block **653.** In an instance in which there is no change in the uplink beam, the uplink timing advance is not adjusted and, instead, a gradual timing adjustment procedure is employed to adjust the uplink timing advance based upon changes over time in the signal propagation delay associated with downlink signals from the same transmission point. See block **657.**

In an instance in which there is a change to the uplink beam, the apparatus **400** of an example embodiment further comprises means, such as the processing circuitry **410** or the like, for determining whether uplink timing information is available. See block **655.** In an instance in which uplink timing information is available, the uplink timing advance is not adjusted and, instead, a gradual timing adjustment procedure is employed as described above with respect to block **657.** However, in an instance in which no uplink timing available, the apparatus provides means, such as the processing circuitry, the communication interface **420,** or the like, for synchronizing with a corresponding downlink beam, such as the downlink reference symbols, from a corresponding transmission point. See block **656.** Following synchronization, the apparatus of this example embodiment also includes means, such as the processing circuitry or the like, for configuring a new uplink timing advance loop, such as by creating a new uplink timing advance loop or replacing an existing uplink timing advance loop as described above with respect to block **664.**

In an instance in which multiple uplink timing advance loops may be maintained and a triggering mobility event in the form of an uplink beam change occurs, such as evidenced by an uplink spatial relation switch, has been detected, the apparatus **400** of an example embodiment further comprises means, such as the processing circuitry **410** or the like, for determining whether uplink timing information is available. See block **655.** In an instance in which uplink timing information is available, the uplink timing advance is not adjusted and, instead, a gradual timing adjustment procedure is employed as described above with respect to block **657.** However, in an instance in which no uplink timing available, the apparatus provides means, such as the processing circuitry, the communication interface **420,** or the like, for synchronizing with a corresponding downlink beam, such as the downlink reference symbols, from a corresponding transmission point. See block **656.** Following synchronization, the apparatus of tis example embodiment also includes means, such as the processing circuitry or the like, for configuring a new uplink timing advance loop, such as by creating a new uplink timing advance loop or replacing an existing uplink timing advance loop as described above with respect to block **664.**

In an instance in which a new uplink timing advance loop is created or one of the existing uplink timing advance loops is replaced, the apparatus **400** includes means, such as the processing circuitry **410** or the like, for determining whether the transmission point remains the same following the triggering mobility event, such as an uplink beam change or a downlink beam change. As shown in block **658,** the apparatus, such as the processing circuitry, of an example embodiment determines whether the transmission point remains the same by determining whether the beam change was inter-RRH, that is, whether the beam change switched to a different RRH. The apparatus, such as the processing circuitry, may be configured to determine whether the transmission point remains the same based on network signaling and/or based on a downlink timing difference between a downlink beam prior to the triggering mobility event and a downlink beam following the triggering mobility event with a downlink timing difference that equals or exceeds a threshold being indicative that the transmission point switched as a result of the triggering mobility event.

In an instance in which the transmission point is determined to have remained the same, the uplink timing advance is not adjusted and, instead, a gradual timing adjustment procedure is employed as described above with respect to block **657,** thereby conserving the technical resources otherwise consumed to create a new uplink timing advance However, in an instance in which the transmission point is determined to have changed as a result of the triggering mobility event, the apparatus **400,** such as the processing circuitry **410** is configured to configure the uplink timing advance loop by synchronizing to a downlink beam from the respective transmission point (such as in an instance in which the same transmission point serves to provide downlink signals) and then using a gradual timing adjustment procedure to adjust the uplink timing advance loop. See block **659.**

As described above with respect to Figure 6, a new uplink timing advance timing loop may be created in those instances in which uplink timing information is not available. While the new uplink timing advance timing loop may be created in response to an uplink beam change, the new uplink timing advance timing loop may also be created in response to other triggering mobility events, such as a downlink beam change or the addition of another downlink beam, such that uplink timing information may be maintained for transmission points that are not currently serving as an uplink, thereby facilitating more timely and efficient transition of an uplink beam to the other transmission points in the future.

Referring now to Figure 7, in an instance depicted in block **710** in which multiple timing advance loops are not supported even though the transmission points, e.g., RRHs, may be located in different positions, the apparatus **400** includes means, such as the processing circuitry **410** or the like, for determine if a triggering mobility event has occurred and, if so, the type of triggering mobility event. See block **712.** In an instance in which the triggering mobility event is an uplink beam change, such as evidenced by an uplink spatial relation switch, the apparatus includes means, such as the processing circuitry or the like, for determining whether downlink timing is available for the new uplink beam. See block **720.** Downlink timing may be available for various reasons. For example, the apparatus, such as the processing circuitry, may have been time and/or frequency tracking the beam or the beam may have been identified by the active TCI state switch. In an instance in which downlink timing is not available for the new uplink beam, additional delay may be added to allow for downlink synchronization since additional reference symbols may be required or may be transmitted by the network, e.g., non-periodic timing reference symbols. See block **726.**The apparatus of this example embodiment also includes means, such as the processing circuitry or the like, for determining whether the transmission point remains the same by determining whether the beam change was inter-RRH, that is, whether the beam change switched to a different RRH. See block **718.**

As also shown in Figure 7, in an instance in which the triggering mobility event is a downlink beam change, such as evidenced by a TCI state switch or the addition of a TCI state, the apparatus **400** includes means, such as the processing circuitry **410** or the like, for determining whether there are also changes to the uplink beam. See block **714.** In an example in which there are no changes to the uplink beam, the uplink timing advance is not adjusted and, instead, a gradual timing adjustment procedure is employed to adjust the uplink timing advance based upon changes over time in the signal propagation delay associated with downlink signals from the same transmission point as described above with respect to block **722.** However, in an instance in which there are changes in the uplink beam, the apparatus includes means, such as the processing circuitry, for determining whether the uplink beam is changing to same transmission point as the downlink beam. See block **716.** If the uplink beam is changed to the same transmission point as the downlink beam, a determination is made by the apparatus, such as the processing circuitry, as to whether the downlink beam has changed to a different transmission point prior to proceeding. As shown in block **724,** the apparatus, such as the processing circuitry, of an example embodiment determines whether the transmission point remains the same by determining whether the beam change was inter-RRH, that is, whether the beam change switched to a different RRH. In an instance in which the transmission point remains the same, the uplink timing advance is not adjusted and, instead, a gradual timing adjustment procedure is employed to adjust the uplink timing advance based upon changes over time in the signal propagation delay associated with downlink signals from the same transmission point. See block **722.** In an instance in which the transmission point is determined to have changed as a result of the triggering mobility event, the apparatus, such as the processing circuitry is configured to configure the uplink timing advance loop by synchronizing to a downlink beam from the respective transmission point (such as in an instance in which the same transmission point serves to provide downlink signals) and then adjusting the uplink timing advance using a PRACH-based or an optional large one-step timing adjustment procedure. See block **728.**

However in an instance in which the uplink beam is not changed to the same transmission point as the downlink beam, the apparatus **400** includes means, such as the processing circuitry **410** or the like, for determining whether the transmission point remains the same following the uplink beam change. As shown in block **718,** the apparatus, such as the processing circuitry, of an example embodiment may determine whether the transmission point remains the same by determining whether the beam change was inter-RRH, that is, whether the beam change switched to a different RRH. Following the determination as to whether the uplink beam has changed to a different transmission point, the apparatus, such as the processing circuitry, is configured to proceed as described above in relation to blocks **722** and **728.**

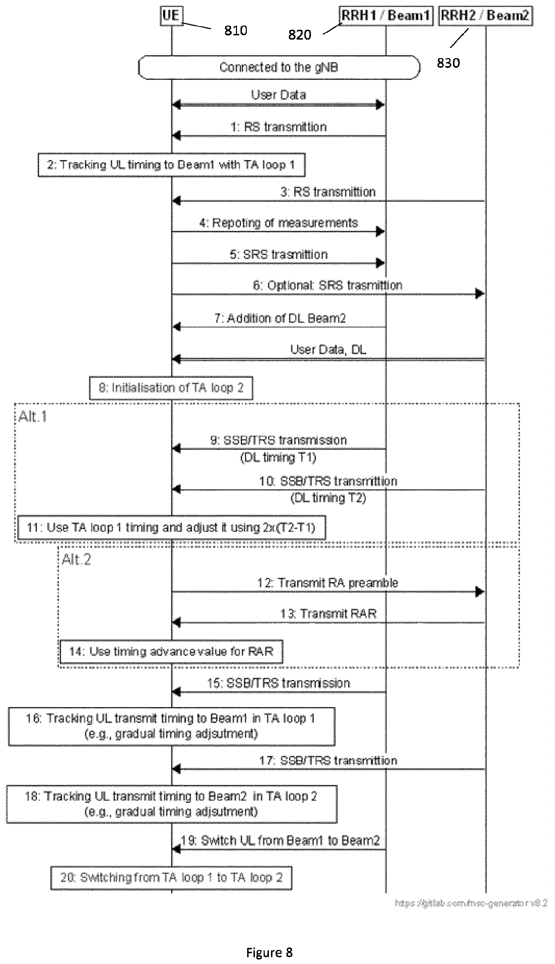

Referring now to Figure 8, a signalling diagram illustrates a process **800** for configuring a second timing advance loop (an uplink timing advance loop for a transmission point different than the transmission point to which the user equipment is currently directing an uplink beam) and configuring an uplink beam based on the second timing advance loop. In this example embodiment, the user equipment **810** is connected to the gNB, e.g., an RRH1 **820.** User data is transmitted through uplink and downlink beams between UE **810** and RRH1 **820.** At operation 1, RRH1 **820** transmits reference symbols to the user equipment **810.** At operation 2, the user equipment **810** tracks uplink timing to the downlink beam with a first timing advance loop, such as by using a gradual timing adjustment procedure.

At operation 3, RRH2 **830** transmits reference symbols to the user equipment **810** so that the user equipment **810** is receiving downlink symbols from multiple spatial directions. At operation 4, the user equipment **810** reports measurements to RRH1 **820.** At operations 5 and 6, the user equipment **810** then transmits sounding reference symbols (SRS) to RRH1 **820** and optionally to RRH2 **830.**

At operation 7, a second downlink beam is transmitted from RRH1 **820** to the user equipment **810.** Hence, in example embodiments user equipment **810** now receives downlink beams from both RRH1 **820** and RRH2 **830** and transmits uplink beams to RRH1 **820.**

At operation 8, the user equipment **810** then initializes a second timing advance loop with respect to RRH2 **830.** The user equipment **810** may configure second timing advance loop using various methods. In one embodiment, at operation 9, the user equipment **810** may configure the second timing advance loop by receiving synchronization signal block or timing reference symbol transmissions in a downlink beam from RRH1 **820** from which a first downlink time (T1) is determinable. At operation 10, the user equipment **810** may receive synchronization signal block or timing reference symbol transmissions in a second downlink beam from RRH2 **830** from which a second downlink time (T2) is determinable. The user equipment **810** may then determine the timing advance for the second timing advance loop based on the timing advance from the first timing advance loop defined for RRH1 and twice the difference in downlink timings between T2 and T1. See operation 11. The user equipment **810** may, for example, determine the uplink transmit timing advance value for RRH1 from the timing for the first timing advance loop as adjusted using 2x(T2-T1). In other words, the user equipment of this example embodiment may be configured to adjust the uplink transmit timing advance value previously defined from the previous transmission point based on a downlink timing difference between a downlink beam prior to the triggering mobility event and a downlink beam following the triggering mobility event and then configure the uplink timing advance loop also based on the adjusted uplink transmit timing advance value. In some example embodiment, the uplink timing advance loop may also be configured based on the current value of the timing advance loop.

In an alternative embodiment, the timing advance may be defined for the second timing advance loop for RRH2 by using random access messages. In this example embodiment, the user equipment **810** may, at operation 12, transmit a random access preamble to RRH2 **830.** In these example embodiments, RRH2 **830** may, at operation 13, transmit a random access reply to the user equipment **810.** In this example embodiment, the random access reply may communicate an absolute timing value to the user equipment **810.** The user equipment **810** may then use the timing advance value in the random access reply configure the second timing advance loop at operation 14.

Thereafter, at operation 15, RRH1 **820** may transmit synchronization signal blocks or timing reference symbols to the user equipment. At operation 16, the user equipment **810** will track uplink transmit timing to beam 1 in the first timing advance loop, such as by using a gradual timing adjustment procedure.

At operation 17 RRH2 **830** may transmit synchronization signal blocks or timing reference symbols to the user equipment **810.** At operation 18, the user equipment **830** may track uplink transmit timing to beam 2 in the second timing advance loop, such as by a gradual timing adjustment procedure.

The user equipment **810** may then switch the uplink beam from beam 1 with RRH1 to beam 2 with RRH2 at operation 19 in response to a mobility triggering event. At operation 20 the user equipment **810** may switch from the first timing advance loop to the second timing advance loop to configure timing for uplink transmissions with RRH2.

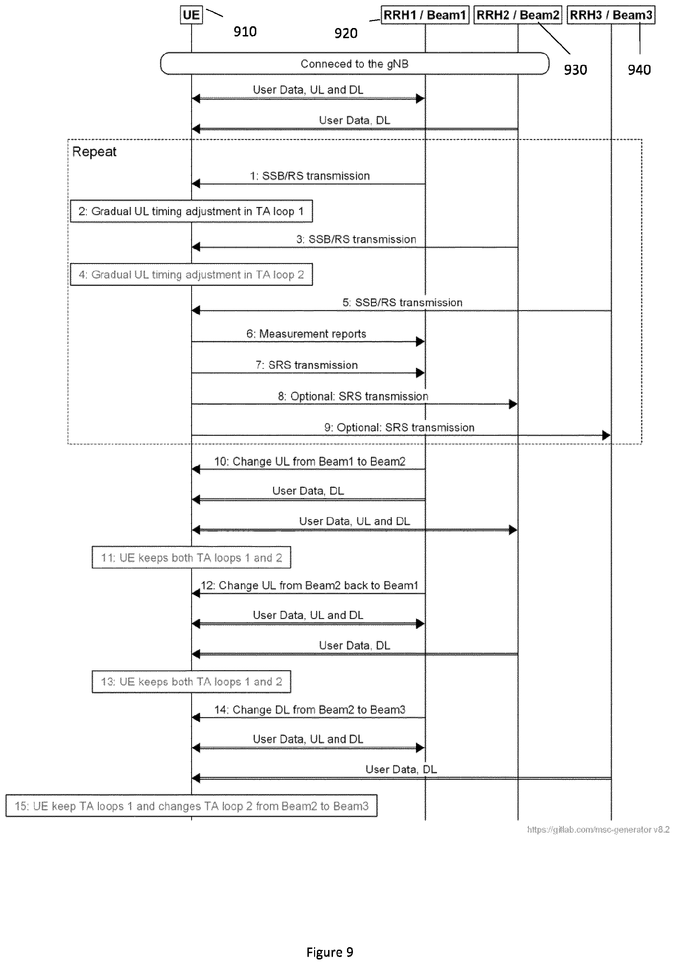

Referring now to Figure 9, a process **900** is illustrated in which the user equipment **910** has two timing advance loops corresponding to beam 1 and beam 2 with RRH1 **920** and RRH2 **930,** respectively. When switching the uplink from beam 1 to beam 2, the second timing advance loop continues to track beam 1 such that if the uplink is thereafter switched back from beam 2 to beam 1, the user equipment can transmit via the uplink with beam 1 immediately using the timing advance providing by the second timing advance loop. Finally, if the downlink beam is changed to beam 3 from RRH3 **940,** the UE **910** also changes the first timing advance loop to determine the timing advance for beam 3, which the second timing advance loop is still used for beam 1.

In this example embodiment, the user equipment **910** is connected to the gNB, e.g., an RRH1 **920.** User data is transmitted through uplink and downlink beams between UE **810** and RRH1 **820.** At operation 1 of Figure 9, synchronization signal block and reference symbol transmissions are sent from RRH1 **920** to the user equipment **910.** In various embodiments at operation 2, the user equipment **910** uses a gradual uplink timing adjustment procedure based on these transmissions in a first timing advance loop. In various embodiments at operation 3, synchronization signal block and reference symbol transmissions are sent from RRH2 **930** to the user equipment **910.** In various embodiments at operation 4, the user equipment **910** uses a gradual uplink timing adjustment procedure based on these transmissions in a second timing advance loop. In various embodiments, user equipment **910** may then receive at operation 5 synchronization signal block and reference symbol transmissions from RRH3 **940.** Measurement reports in various embodiments are sent from user equipment to RRH1 **920** at operation 6 in various embodiments. In one or more embodiments, sounding reference symbol transmissions are sent from user equipment to RRH1 **920** at operation 7. In some embodiments, sounding reference symbol transmissions are optionally further sent from user equipment 910 to RRH2 **930** at operation 8. In some embodiments, sounding reference symbol transmissions are further sent from user equipment to RRH3 **940** at operation 9. In some embodiments, operations 1-9 are repeated a plurality of times.

At operation 10 of Figure 9, the user equipment **910** changes the uplink from beam 1 to beam 2 so that the uplink beam is received at RRH2 **930.** In an example embodiment, this change results in user data being transferred from RRH1 **920** to the user equipment **910** via downlink signals and in user data being transferred back and forth between user equipment **910** and RRH2 **930** via uplink and downlink signals.

At operation 11 user equipment **910** keeps both the first and second timing advance loops based on beam 1 and beam 2, respectively. At operation 12, the user equipment **910** changes the uplink signal from beam 2 back to beam 1, which results in user data being transferred back and forth between user equipment **910** and RRH1 **920** via uplink and downlink signals, as well as user data being transferred from RRH2 **930** to user equipment 910 via downlink signals.

At operation 13, user equipment **910** keeps both the first and second timing advance loops based on beam 1 and beam 2, respectively. At operation 14, the downlink signal is changed from beam 2 to beam 3, resulting in user data being transferred back and forth via uplink and downlink signals between user equipment **910** and RRH1 **920** and in user data being transferred from RRH3 **940** to user equipment **910** via downlink signals. In operation 15, the user equipment **910** of this example embodiment keeps the first timing advance loop associated with beam one and switches the second timing advance loop from beam two to beam three. In other example embodiments, the timing advance loop that is not currently being used for uplink signals switches to a new beam.

As described above, the apparatus, method and computer program product can be employed in an example embodiment in which two or more beams can be received by the user equipment in downlink, and the user equipment possesses two timing advance loops, but only one beam or one of the panels can be used for uplink at a time. However, the apparatus, method and computer program product can be further applied in cases when user equipment is capable of transmission from two or more panels or with two or more beams at a time, but more uplink timing advance loops are supported than uplink beams and/or in which the user equipment is capable of receiving more downlink beams than uplink beams simultaneously.

A method, apparatus, and computer program product are therefore provided for configuring an uplink timing advance loop that is not associated with an active uplink beam in order to facilitate uplink transmission including uplink transmission following a change in the uplink beam. By configuring an uplink timing advance loop for a transmission point prior to transmitting an uplink beam to the transmission point, an uplink beam can subsequently be changed to the different transmission point, such as a different gNB, more efficiently and with less delay. Thus, uplink communications can be conducted more seamlessly and efficiently.

Figures 5-7 illustrate flowcharts depicting methods according to an example embodiment of the present invention. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 430 of an apparatus employing an embodiment of the present invention and executed by processing circuitry 410, e.g., a processor. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

## Claims

1. An apparatus comprising:
means for determining that a plurality of timing advance loops are supported to a plurality of transmission points;
in response to a triggering mobility event, means for determining whether uplink timing information is available for a respective transmission point; and
in response to a determination that uplink timing information is unavailable for the respective transmission point, means for configuring an uplink timing advance loop by synchronizing to a downlink beam from the respective transmission point and using a gradual timing adjustment procedure to adjust the uplink timing advance loop.

2. The apparatus according to claim 1, further comprising means for maintaining a plurality of uplink timing advance loops simultaneously for a plurality of transmission points.

3. The apparatus according to claim 1 or 2, wherein the triggering mobility event comprises an uplink beam change or a downlink beam change, and wherein the means for configuring the uplink timing advance loop comprises:
means for determining whether the transmission point remains the same following the uplink beam change or the downlink beam change;
in response to a determination that the transmission point remains the same, means for configuring the uplink timing advance loop also based on an uplink transmit timing advance value previously defined for the transmission point; and
in response to a determination that the transmission point does not remain the same, means for configuring the uplink timing advance loop also based on target beam timing information.

4. The apparatus according to claim 3, wherein the determining whether the transmission point remains the same is based on a downlink timing difference between a downlink beam prior to the triggering mobility event and a downlink beam following the triggering mobility event or based on network signaling.

5. The apparatus according to claim 3, wherein the transmission point does not remain the same, and wherein the apparatus further comprises:
means for causing transmission of a random access preamble using a downlink beam after the triggering mobility event;
means for receiving a random access reply message;
means for determining a timing advance absolute value based on the random access reply message; and
means for configuring the uplink timing advance loop also based on the timing advance absolute value.

6. The apparatus according to claim 3, wherein the transmission point does not remain the same, and wherein the apparatus further comprises:
means for adjusting the uplink transmit timing advance value previously defined from the previous transmission point based on a downlink timing difference between a downlink beam prior to the triggering mobility event and a downlink beam following the triggering mobility event; and
means for configuring the uplink timing advance loop also based on the adjusted uplink transmit timing advance value.

7. The apparatus according to any of claims 1-6, further comprising:
in response to a downlink beam change serving as the triggering mobility event, means for synchronizing one of the plurality of uplink timing advance loops to a downlink beam and means for using a gradual timing adjustment procedure to adjust the uplink timing advance loop.

8. The apparatus according to any of claims 1-7, further comprising:
in an instance in which the plurality of timing advance loops are not supported and in response to a downlink beam change serving as the triggering mobility event, means for determining whether an uplink beam has changed;
in an instance in which the uplink beam has not changed, means for configuring the uplink timing advance loop by synchronizing to a downlink beam and using a gradual timing adjustment procedure to adjust the uplink timing advance loop; and
in an instance in which the uplink beam has changed, means for configuring the uplink timing advance loop based on whether the transmission point has changed.

9. A method comprising:
determining that a plurality of timing advance loops are supported to a plurality of transmission points;
in response to a triggering mobility event, determining whether uplink timing information is available for a respective transmission point; and
in response to a determination that uplink timing information is unavailable for the respective transmission point, configuring an uplink timing advance loop by synchronizing to a downlink beam and/or reference signal from the respective transmission point by setting a timing advance value and then using a gradual timing adjustment procedure to adjust the uplink timing advance loop.

10. The method according to claim 9, further comprising: maintaining a plurality of uplink timing advance loops simultaneously for a plurality of transmission points.

11. The method according to claim 9 or 10, wherein the triggering mobility event comprises an uplink beam change, a downlink beam change, a change of reference signals, a change of a precoding matrix, a change of the respective transmission point or a change of antenna panel, and wherein configuring the uplink timing advance loop comprises:
determining whether the transmission point remains the same following the uplink beam change or the downlink beam change;
in response to a determination that the transmission point remains the same, configuring the uplink timing advance loop also based on an uplink transmit timing advance value previously defined for the transmission point; and
in response to a determination that the transmission point does not remain the same, configuring the uplink timing advance loop also based on target beam timing information.

12. The method according to claim 11, wherein the determining whether the transmission point remains the same is based on a downlink timing difference between a downlink beam prior to the triggering mobility event and a downlink beam following the triggering mobility event or based on network signaling.

13. The method according to claim 11, wherein the transmission point does not remain the same, and wherein the method further comprises:
causing transmission of a random access preamble using a downlink beam after the triggering mobility event;
receiving a random access reply message;
determining a timing advance absolute value based on the random access reply message; and
configuring the uplink timing advance loop also based on the timing advance absolute value.

14. The method according to claim 11, wherein the transmission point does not remain the same, and wherein the method further comprises:
adjusting the uplink transmit timing advance value previously defined from the previous transmission point based on a downlink timing difference between a downlink beam prior to the triggering mobility event and a downlink beam following the triggering mobility event; and
configuring the uplink timing advance loop also based on the adjusted uplink transmit timing advance value.

15. The method according to any of claims 9-14, further comprising:
in response to a downlink beam change serving as the triggering mobility event, synchronizing one of the plurality of uplink timing advance loops to a downlink beam and using a gradual timing adjustment procedure to adjust the uplink timing advance loop.
